# EUROPEAN PATENT SPECIFICATION

(11) **EP 3 217 276 B1**
(45) Date of publication and mention of the grant of the patent: **31.08.2022**
(21) Application number: 17159388.2
(22) Date of filing: 06.03.2017
(51) Int. Cl.: G06F 3/12

(54) **INFORMATION PROCESSING SYSTEM, JOB PROCESSING METHOD, DATA STORAGE APPARATUS, INFORMATION DEVICE, AND CARRIER MEANS**
INFORMATIONSVERARBEITUNGSSYSTEM, JOBVERARBEITUNGSVERFAHREN, DATENSPEICHERUNGSVORRICHTUNG, INFORMATIONSVORRICHTUNG UND TRÄGERANORDNUNG
SYSTÈME DE TRAITEMENT D'INFORMATIONS, PROCÉDÉ DE TRAITEMENT DE TÂCHES, APPAREIL DE MÉMORISATION DE DONNÉES, DISPOSITIF D'INFORMATIONS ET MOYEN DE TRANSPORT

(30) Priority: 08.03.2016 JP 2016044291
(43) Date of publication of application: 13.09.2017
(73) Proprietor: Ricoh Company, Ltd., Tokyo 143-8555 (JP)
(72) Inventor: WATANABE, Hodaka, Tokyo, 143-8555 (JP)
(74) Representative: SSM Sandmair

(56) References cited:
- US-A1- 2007 002 351
- US-A1- 2008 092 239

## Description

### BACKGROUND

### Technical Field

The present invention relates to an information processing system, a job processing method, and carrier means.

### Description of the Related Art

A printing system is known that includes a terminal, a print server, and one or more image forming apparatuses. In this printing system, the terminal encrypts print data using key information that a user possesses, and the encrypted print data is temporarily stored in the print server. The print data stored in the print server is printed from a desired image forming apparatus from among the one or more image forming apparatuses. In this printing system, the encrypted print data is decrypted with authentication information of the user when the print data is printed. Because the print data is encrypted using the key information that the user possesses, information contained in the print data is kept confidential on the print server.

However, in the printing system according to the background art, the print data cannot be decrypted on the print server. For this reason, when the image forming apparatus acquires the print data from the print server, it is difficult to change print setting information contained in the print data at the print server. In other words, it is difficult to satisfy two demands at a time, one being a demand for securing the confidentiality of printed matter and the other being a demand for changing a print setting at a time of printing.

JP-4018645-B2 (JP-2005-216029-A) relates to an encryption of print data. JP-4018645-B2 discloses separating a print job generated by a driver into a page description language (PDL) data part containing confidential information and an attribute part containing additional information and encrypting the separated PDL data part using received user public key information to generate a secure job.

However, there is still a need for the development a technique that satisfies two demands at a time, one being a demand for securing the confidentiality of a data carrying medium such as printed matter and the other being a demand for changing the print setting.

US 2007/002351 A1 discloses a job ticket issuing device including a document encryption processing unit for encrypting document data with a document data encryption key; and a job ticket encryption processing unit for encrypting a job ticket, including information about a content of job processing with respect to the document data, with a job ticket encryption key which is different from the document data encryption key.

### SUMMARY

The invention is defined by the appended claims.

In one aspect of the present invention, an information processing system (100) includes a terminal apparatus (110), a data storage apparatus (140), and an information device (170) according to claim 1.

According to one aspect of the present invention, the confidentiality of job data is secured while the setting of the job data can be changed.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a schematic diagram illustrating a configuration of an image forming system according to an embodiment of the present invention;
FIG. 2 is a block diagram illustrating a hardware configuration of a print server according to an embodiment of the present invention;
FIG. 3 is a block diagram illustrating a hardware configuration of an image forming apparatus according to an embodiment of the present invention;
FIGs. 4A to 4D are block diagrams illustrating functional configurations of apparatuses constituting the image forming system of FIG. 1 according to an embodiment of the present invention;
FIG. 5 is a view illustrating a typical data structure of print data according to an embodiment of the present invention;
FIG. 6 is an illustration for describing an overall flow of data in the image forming system of FIG. 1 according to an embodiment of the present invention;
FIG. 7 is an example of a print-setting change screen displayed on a control panel of the image forming apparatus of FIG. 3 in the image forming system of FIG. 1 according to an embodiment of the present invention;
FIG. 8 is a flowchart illustrating steps in an operation of storing print data from a terminal to the print server in the image forming system of FIG. 1 according to an embodiment of the present invention;
FIG. 9 is an example illustration for describing a flow of data in an operation of separating and encrypting the print data performed by the terminal according to an embodiment of the present invention;
FIG. 10 is an example illustration for describing a flow of data in an operation of storing print data performed by the print server according to an embodiment of the present invention;
FIGs. 11A and 11B are a flowchart illustrating steps in an operation of acquiring print data from the print server to the image forming apparatus to perform printing processing in the image forming apparatus according to an embodiment of the present invention;
FTG. 12 is an example illustration for describing a flow of data in an operation of transmitting print data in response to a request for acquiring print data performed by the print server according to an embodiment of the present invention;
FIG. 13 is a flowchart illustrating steps in authentication processing performed by the image forming apparatus and an authentication server in cooperation with each other according to an embodiment of the present invention, and
FIG. 14 is a flowchart illustrating steps in an operation of changing print setting of print data stored in the print server in response to a request form the terminal according to an embodiment of the present invention.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that operate in a similar manner, within the scope of the claims.

An example embodiment of the present invention will be described hereinafter with reference to drawings.

Hereinafter, a description is given of an example in which an image forming system 100, a print server 140, and an image forming apparatus 170 are, respectively, examples of an information processing system, a data storage apparatus, and an information device.

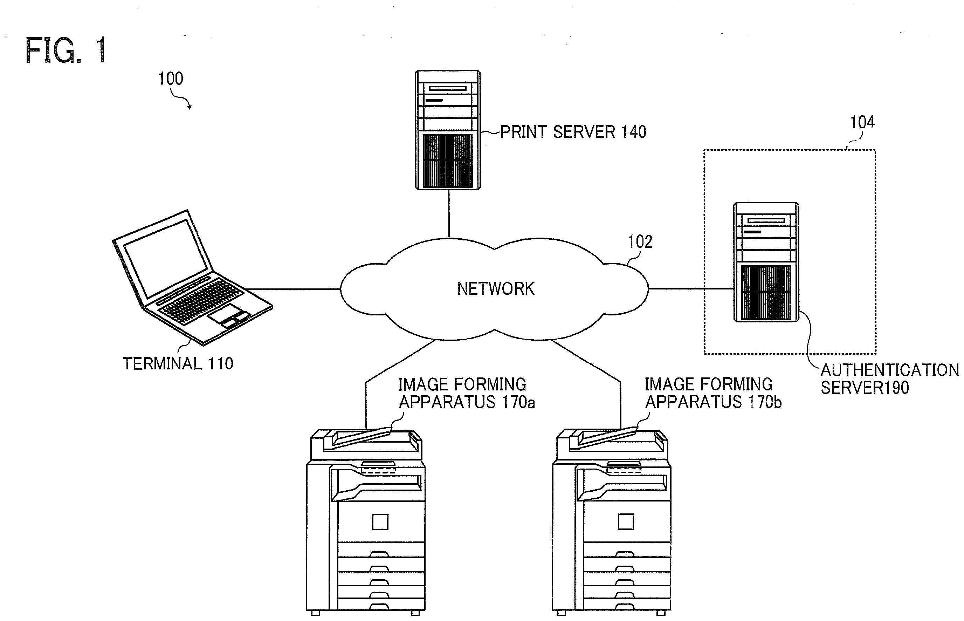

FIG. 1 is a schematic diagram illustrating a configuration of the image forming system 100 according to the present embodiment. As illustrated in FIG. 1, the image forming system 100 includes one or more terminals 110, the print server 140, one or more image forming apparatuses 170, and an authentication server 190. The one or more terminal 110, the print server 140, the one or more image forming apparatuses 170, and the authentication server 190 are connected to one another via a network 120 such as a local area network (LAN). Accordingly, they can exchange data with one another. It should be noted that, although in FIG. 1, the image forming system 100 includes one terminal 110 as an example of a terminal apparatus and two image forming apparatuses 170a and 170b, each being an example of an information device, there may be any suitable number of terminal devices and information devices.

Examples of the terminal 110 include a general-purpose computer such as a desktop computer, a laptop computer, and a tablet computer, and a mobile terminal such as a smartphone. The terminal 110 is installed with an application for creating text documents and a printer driver for generating print data, for example. The terminal 110 issues a print job in accordance with a user instruction, and thereby the user can obtain printed matter.

For example, the print server 140 is implemented by a general-purpose computer such as a personal computer, a workstation, and a server computer. In the described embodiment, the print server 140 provides a server function that stores print data received from the terminal 110 and transmits print data in response to a request from the image forming apparatus 170.

The image forming apparatus 170 performs print processing based on print data. Examples of image forming apparatus 170 include a multifunction peripheral and a printer. The image forming apparatus 170 receives, from the print server 140, the print data that is transmitted from the terminal 110 and stored in the print server 140, and performs image formation based on the received print data.

In the described embodiment, the print data constitutes job data, and the print processing constitutes job processing. However, the job data and the job processing are not particularity limited thereto. Further, the information device is not limited to the image forming apparatus. In one or more embodiments not falling under the scope of the claims, the job data could be any type of job data other than the print job, and the job processing could be any type of job processing other than the print processing. Further, the information device could be any device, provided that it performs job processing based on job data.

The authentication server 190 is implemented by, for example, a general-purpose computer such as a personal computer, a workstation, and a server computer. The authentication server 190 provides an authentication server function that performs a user authentication of a user who operates the image forming apparatus 170.

In the image forming system 100 according to the described embodiment, the terminal 110 transmits encrypted print data to the print server 140 in accordance with a user instruction. The print server 140 temporarily stores the encrypted print data received from the terminal 110. The user operates a control panel of a desired image forming apparatus 170 to obtain the print data stored in the print server 140. Further, the user instructs the image forming apparatus 170 to decrypt the print data using an encryption key that the user possesses to obtain desired printed matter.

In this image forming system 100, a problem occurs if the print data cannot be decrypted on the print server 140. In other words, it becomes difficult to change print setting information contained in the print data on the print server 140 when the image forming apparatus 170 acquires the print data from the print server 140. For this reason, it is required to satisfy two demands at a time, one being a demand for securing the confidentiality of printed matter and the other being a demand for changing a print setting by the print server 140 at a time of printing instead of by the image forming apparatus 170.

To address this issue, in the image forming system 100 according to the present embodiment, the terminal 110 separates print data into two parts, that is, a print setting information part and a drawing data part. Further, the terminal 110 selects different types of encryption processing respectively to the separated two parts. Preferably, the encryption processing performed on the drawing data part of the print data is processing of encrypting the drawing data part such that encrypted data is decrypted based on user-specific key information. The terminal 110 transmits, to the print server 140, the print data including the encrypted print setting information part and drawing data part. Further, the terminal 110 notifies the print server 140 of information indicating at least the encryption processing that is performed on the print setting information part.

The print server 140 stores the print data received from the terminal 110. Further, the print server 140 determines, based on the information indicating the encryption processing notified from the terminal 110, whether the print setting information part of the received print data can be changed based on key information that the print server 140 possesses.

Preferably, the print server 140 decrypts the setting information part when the determination result indicates that the setting can be changed. Preferably, in response to receiving change information requesting a change to the setting information part, the print server 140 reflects the change information on the decrypted setting information part to change the setting information part. Further, the print server 140 re-encrypts the changed setting information part such that the re-encrypted part can be decrypted based on the user-specific key information.

The image forming apparatus 170 receives the print data from the print server 140 and decrypts the received print data. Further, the image forming apparatus 170 integrates the setting information part and the drawing data part. Preferably, the image forming apparatus 170 can decrypt each part of the received job data based on the user-specific key information. The image forming apparatus 170 can perform print processing based on the integrated print data.

With this configuration, the drawing data part of the print data is kept confidential on a communication path and on the print server 140, while the print setting information part of the print data can be changed on the print server 140.

In an embodiment illustrated in FIG. 1, a description is given of an example in which the information forming system 100 includes the authentication server 190 that performs authentication processing. However, this is just an example, and in other embodiments, the image forming apparatus 170 may perform authentication processing. In this case, the image forming system 100 may not include the authentication server 190 that is surrounded by a dotted line 104 in FIG. 1.

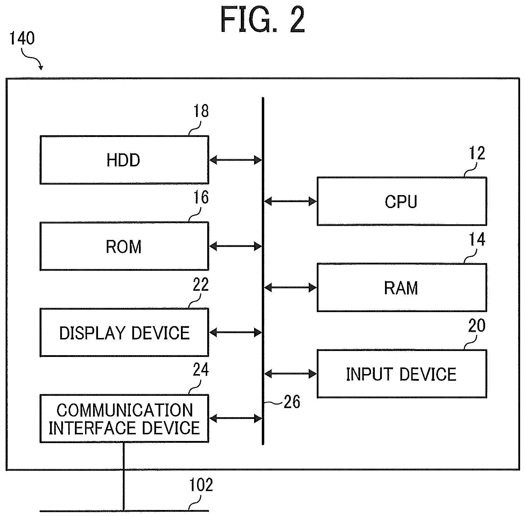

Hereinafter, a description is given of secured print processing performed by the image forming system 100 according to the present embodiment with reference to FIGs. 2 to 14

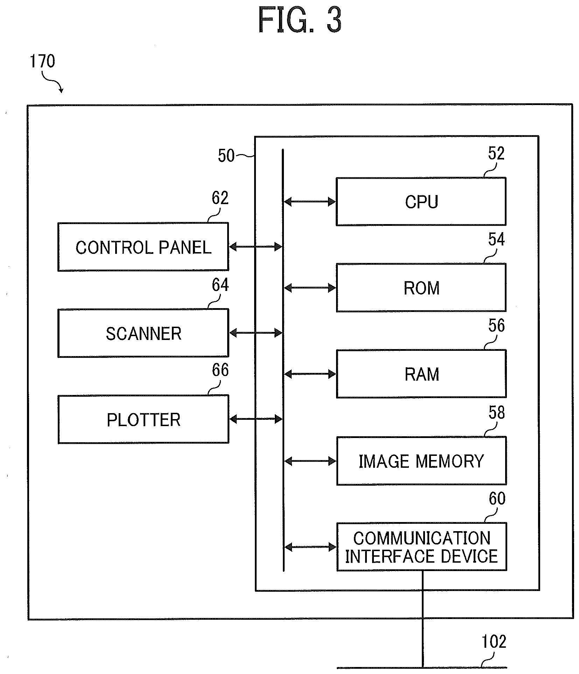

First, a description is given of a hardware configuration of each of apparatuses constituting the image forming system 100 with reference FIGs. 2 and 3.

FIG. 2 is a block diagram illustrating a hardware configuration of the print server 140 according to the present embodiment. The print server 140 is implemented by, for example, a general-purpose computer. The print server 140 illustrated in FIG. 2 includes a central processing unit (CPU) 12 with a single core or multiple cores, a random access memory (RAM) 14, a read only memory (ROM) 16, and a hard disc drive (HDD) 18, and a communication interface device 24. The print server 140 may include an input device 20 and a display device 22 as needed.

The CPU 12 controls an entire operation of the print server 140 such as internal processing. The RAM 14 provides a work area for the CPU 12. The ROM 16 stores control programs such as a Basic Input/Output System (BIOS). The HDD 18 stores an operating system (OS) for controlling a computer apparatus, a program for implementing functional blocks described later, various system information, and various setting information.

The input device 20 is an input device such as a mouse, a keyboard, a touchscreen panel. The display device 22 is a display device such as a liquid crystal display (LCD) device and an organic electro luminescence (EL) display. The input device 20 and the display device 22 provide a user interface to accept inputs of various instructions from an operator. The communication interface device 24 is an interface device such as a network interface card (NIC) that connects the print server 140 to the network 102.

The print server 140 according to the present embodiment reads out the programs from the ROM 16 or the HDD 18 and loads the programs to the work area provided by the RAM 14 to implement each of functional blocks and operations described later, under control of the CPU 12. Although a description is given heretofore of the hardware configuration of the print server 140 with reference to FIG. 2, the terminal 110 and the authentication server 190 can have the similar or substantially the similar hardware configuration with the addition or deletion of suitable hardware components to or from the hardware components illustrated in FIG. 2.

FIG. 3 is a block diagram illustrating a hardware configuration of the image forming apparatus 170 according to the present embodiment. The image forming apparatus 170 is implemented by an image forming apparatus that has an image formation function and an image reading function. The image forming apparatus 170 illustrated in FIG. 3 includes, on a controller board 50, a CPU 52 with a single core or multiple cores, a ROM 54, a RAM 56, an image memory 58, and a communication interface device 60. The RAM 56 provides a work area for the CPU 52. Further, the image forming apparatus 170 includes a control panel 62, a scanner 64, and a plotter 66, which are connected to the controller board 50.

The CPU 52 controls an operation of the image forming apparatus 170 such as image processing. The ROM 54 stores programs that enable the image forming apparatus 170 to function. The RAM 56 provides a work area used by the CPU 52 when executing programs stored in the ROM 54 or an HDD. The image memory 58 provides a work area used for image processing in scanning or printing. The communication interface device 60 is an interface device such as a wireless LAN adopter and a NIC in compliance with IEEE 802.11 standard. The communication interface device 60 connects the image forming apparatus 170 to the network 102.

The control panel 62 is connected to the controller board 50. The control panel 62 includes a display device such as a LCD panel and an organic EL display and an input device such as a touchscreen panel. The control panel 62 provides a user interface to display an operation screen that accepts inputs of various instructions from an operator and to display a screen. The scanner 64 performs scan processing in response to an execution instruction for scanning from the controller board 50. The plotter 66 performs image forming processing based on the print data from the terminal 110 or the scan data from the scanner 64 in response to an execution instruction for image formation from the controller board 50.

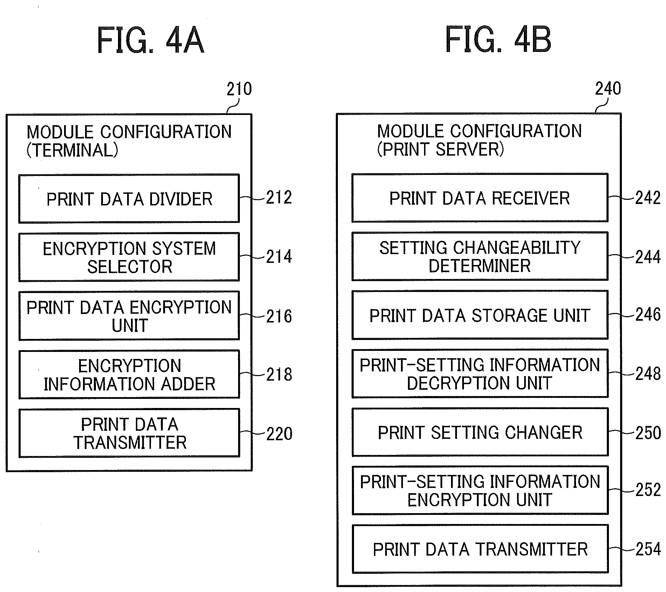

Hereinafter, a description is given of functional blocks for implementing secured print processing in the image forming system 100 according to the present embodiment with reference to FIGs. 4A to 4D. FIGs. 4A to 4D are block diagrams illustrating functional configurations of apparatuses constituting the image forming system 100 according to the present embodiment. More specifically, FIGs. 4A to 4D illustrate, respectively, a module configuration 210 included in the terminal 110, a module configuration 240 included in the print server 140, a module configuration 270 included in the image forming apparatus 170, and a module configuration 290 included in the authentication server 190.

First, a description is given of a functional configuration of the terminal 110 with reference to FIG. 4A. As illustrated in FIG. 4A, the module configuration 210 of the terminal 110 includes a print data divider 212, an encryption system selector 214, and a print data encryption unit 216, an encryption information adder 218, and a print data transmitter 220.

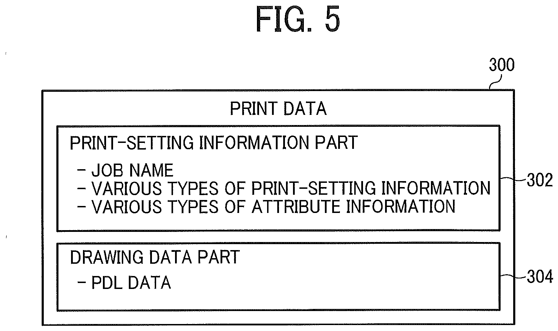

When a print instruction that designates a printer driver corresponding to the printer driver 18 is given from the application software on the terminal 110, the print data is delivered to the print data divider 212. FIG. 5 is a view illustrating a typical data structure of print data.

As illustrated in FIG. 5, print data 300 includes a print-setting information part 302 and a drawing data part 304. The print-setting information part 302 includes a job name, various types of print-setting information, and various types of attribute information. The drawing data part 304 includes page description language (PDL) data that describes a drawing content of printed matter in a PDL. Confidential information of printed matter is usually contained in the drawing data part 304. The print-setting information part 302 and the drawing data part 304 constitute, respectively, a setting information part and a substantive data part in the present embodiment.

Referring again to FIG. 4A, the print data divider 212 divides the received print data 300 into the print-setting information part 302 and the drawing data part 304. The encryption system selector 214 selects different systems of encryption processing applied to, respectively, the print-setting information part 302 and the drawing data part 304 of the print data 300. The encryption system applied to each of the print-setting information part 302 and the drawing data part 304 is selected based on a setting that is configured in advance. The print data encryption unit 216 encrypts the print-setting information part 302 and the drawing data part 304 respectively with the different systems of encryption selected by the encryption system selector 214. It should be noted that the encryption system selector 214 constitutes selecting means of a terminal in the present embodiment.

In the described embodiment, the encryption system applied to each of the print-setting information part 302 and the drawing data part 304 is selected in accordance with a setting that is configured in advance as described above. Preferably, the encryption system selector 214 can select, as the encryption processing applied to the print-setting information part 302, processing that encrypts the print-setting information part 302 such that the encrypted part is later decrypted based on key information specific to the print server 140. By contrast, preferably, the encryption system selector 214 can select, as the encryption processing applied to the drawing data part 304, processing that encrypts the drawing data part 304 such that the encrypted part is later decrypted based on user-specific key information.

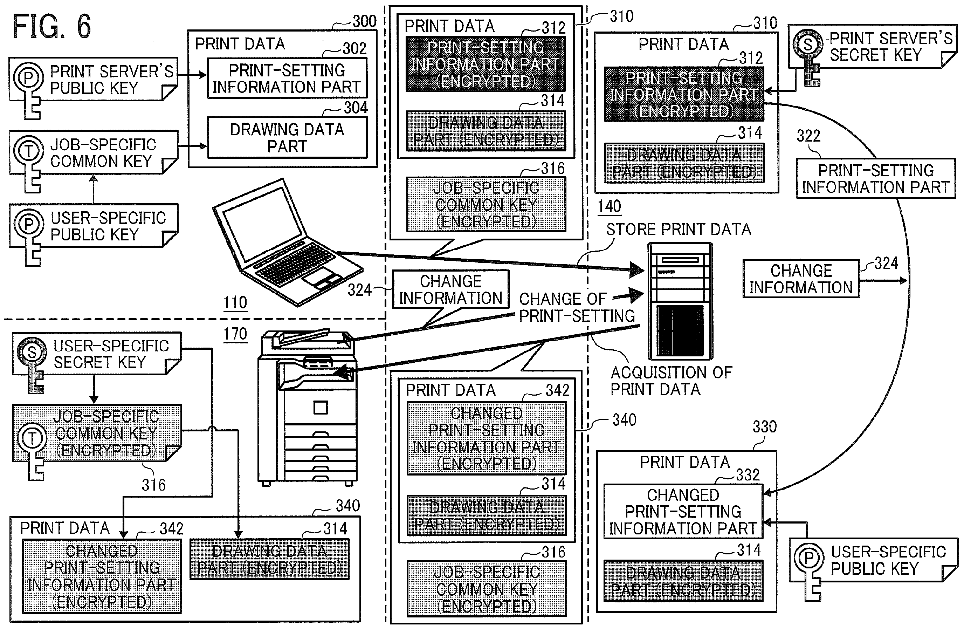

The encryption information adder 218 adds encryption information to each of the print-setting information part 302 and the drawing data part 304. The encryption information indicates which system of encryption is applied to each of the part 302 and 304. The print data transmitter 220 transmits print data 310 (described later with reference to FIG. 6) containing the encrypted print-setting information part and the encrypted drawing data part to the print server 140. As the print data 310 is transmitted to the print server 140, the encryption information added to the print data 310 is also notified to the print server 140. The encryption information adder 218 and the print data transmitter 220 constitute notifying means of the terminal in the present embodiment. It should be noted that this encryption information contains information indicating the encryption system and a type of key used for the encryption. In other words, the encryption information does not contain the key information itself to be used for decryption.

FIG. 6 is an illustration for describing an overall flow of data in the image forming system 100 according to the present embodiment. It should be noted that FIG. 6 illustrates an example in which encryption processing using a print server's public key is set to the print-setting information part 302, whereas encryption processing using a user-specific public key is set to the drawing data part 304. The terminal 110 is able to acquire the print server's public key and the user-specific public key as necessary.

In an example illustrated in FIG. 6, the print-setting information part 302 of the print data 300 is encrypted using the print server's public key, and the drawing data part 304 is encrypted using a job-specific common key. This job-specific common key is a temporary encryption key of a common key system that is generated specific to a job of specific print data. The job-specific common key is further encrypted using the user-specific public key. Accordingly, the encrypted print-setting information part 312 can be decrypted using a print server's secret key corresponding the print server's public key. By contrast, the encrypted drawing data part 314 can be decrypted using a user-specific secret key corresponding to the user-specific public key.

Heretofore, a description is given of an example in which the print-setting information part 302 is encrypted with a public key encryption system using the print server's public key. Further, heretofore, a description is given of an example in which the drawing data part 304 encrypted with a common key encryption system using the job-specific common key, which is later encrypted with a public key encryption system using the user-specific public key. It should be noted that these are just examples and any suitable encryption processing is performed on each data part. On each of the print-setting information part 302 and the drawing data part 304, either encryption of the part using a public key encryption system, or encryption of the part using a common key encryption system and encryption of the common key using a public key system can be performed independently.

In response to a request for storing print data, the print data 310 including the encrypted print-setting information part 312 and the encrypted drawing data part 314 is transmitted from the terminal 110 to the print server 140 together with the encrypted job-specific common key 316, as illustrated in FIG. 6.

Hereinafter, a description is given of a functional configuration of the print server 140 with reference to FIG. 4B. As illustrated in FIG. 4B, the module configuration 240 of the print server 140 includes, a print data receiver 242, a setting changeability determiner 244, a print data storage unit 246, a print-setting information decryption unit 248, a print setting changer 250, a print-setting information encryption unit 252, and a print data transmitter 254.

The print data receiver 242 receives the print data 310 including the print-setting information part 312 and the drawing data part 314, which are obtained by encrypting the print-setting information part 302 and the drawing data part 304, respectively, by different encryption processings. The print data receiver 242 constitutes receiving means of the data storage apparatus in the present embodiment.

Further, the setting changeability determiner 244 determines, based on the encryption information added to the print data 310, whether the print-setting information part 312 of the received print data 310 can be decrypted using the print server's secret key. In other words, the setting changeability determiner 244 determines whether the print setting can be changed. As described above, the encryption information contains information indicating the encryption system that is applied to the print-setting information part 302 when obtaining the print-setting information part 312 and information indicating a type of the key used for encrypting the print-setting information part 302. Accordingly, when the encryption information indicates the encryption processing using the print server's public key, the setting changeability determiner 244 determines that it is possible to decrypt the encrypted print-setting information part 312 and to change the print setting. Based on the determination result, the setting changeability determiner 244 adds, to the print data 310, print-setting changeability information indicating whether the print setting can be changed. The setting changeability determiner 244 constitutes determining means of the data storage apparatus in the present embodiment.

The print data storage unit 246 stores print data received from the terminal 110. Preferably, the print data storage unit 246 stores the print data 310 together with the print-setting changeability information. A storage area in which the print data is stored is implemented by the HDD 18 of the print server 140. The print data storage unit 246 constitutes storage means of the data storage apparatus in the present embodiment.

In response to a request for changing the print setting from an external apparatus, for example, the print setting changer 250 changes the print setting using the print-setting information decryption unit 248 and the print-setting information encryption unit 252, when it is determined that the print setting can be changed.

The print-setting information decryption unit 248 decrypts the print-setting information part 312 based on the encryption information, when it is determined that the print setting can be changed. The print setting changer 250 updates the decoded print-setting information part to reflect a change based on change information received with the request for changing the print setting. The print-setting information encryption unit 252 re-encrypts the print-setting information part that is updated to reflect the change. The print-setting information decryption unit 248 constitutes decrypting means in the present embodiment. The print setting changer 250 constitutes changing means in the present embodiment. Further, the print-setting information encryption unit 252 constitutes encrypting means in the present embodiment.

In response to a request for acquiring print data from the image forming apparatus 170, the print data transmitter 254 transmits print data requested by the received request to the image forming apparatus 170. The print data may include the encrypted drawing data part and the re-encrypted print-setting information part. The print data transmitter 254 constitutes transmission means of the data storage apparatus in the present embodiment.

Referring again to FIG. 6, the print server 140 receives the print data 310 from the terminal 110 and stores the received print data 310. In the described example, the encrypted print-setting information part 312 is decrypted using the print server's secret key corresponding to the print server's public key that is used for encrypting the print-setting information part 302 at the terminal 110. With this decryption processing, the print setting can be read out and changed in subsequent processing. When the change of the print setting is requested, the print server 140 receives change information 324.

In response to a request for acquiring print data from the image forming apparatus 170 on which a user has been verified, the print server 140 updates a decrypted print-setting information part 322 to reflect a change based on the received change information 324 as needed. Further, the print server 140 re-encrypts a changed print-setting information part 332 using the user-specific public key. A re-encrypted print-setting information part 342 can be decrypted using the user-specific secret key corresponding to the user-specific public key. Accordingly, the entirety of the print data 340 can be decrypted using the user-specific secret key (with the encrypted job-specific common key 316). It should be noted that the print server 140 can acquired the user-specific public key as necessary.

The print data 340 including the print-setting information part 342 that is encrypted using the user-specific public key and the encrypted drawing data part 314 is transmitted to the image forming apparatus 170 together with the encrypted job-specific common key 316.

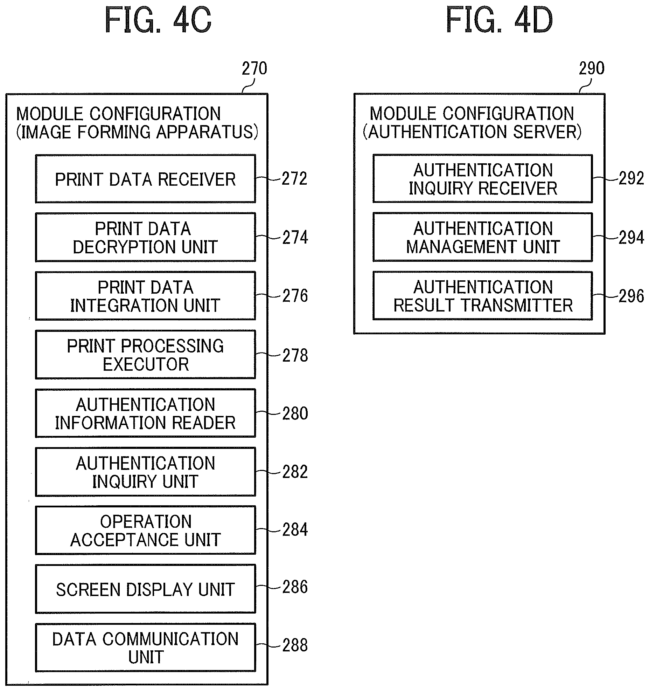

Hereinafter, a description is given of a functional configuration of the image forming apparatus 170 with reference to FIG. 4C. As illustrated in FIG. 4C, the module configuration 270 of the image forming apparatus 170 includes, a print data receiver 272, a print data decryption unit 274, a print data integration unit 276, a print processing executor 278, an authentication information reader 280, and an authentication inquiry unit 282.

The image forming apparatus 170 includes an authentication information reading apparatus such as an integrated circuit (IC) card reader that reads an authentication device such as an IC card. The authentication device such as an IC card stores user's authentication information or identification information associated with the authentication information, and the user-specific secret key in a secured manner. When an authentication procedure is requested by placing the IC card over the IC card reader or inserting the IC card into the IC card reader, the authentication information stored in the IC card is read out for execution of authentication processing. When the authentication succeeds and a use authority is granted, the user-specific secret key stored in the IC card becomes available.

The IC card is just an example of the authentication device, and any suitable device that can be carried by a user and store a secret key in a secured manner may be used, such as a portable terminal like a smartphone. A secret key stored in the authentication device may be a key that is generated and managed in organizations such as public offices, educational institutes, and enterprises.

The authentication information reader 280 communicates with the authentication device such as an IC card to read out the authentication information stored therein. The authentication information reader 280 constitutes reading means of the information device in the present embodiment. In response to the authentication procedure from a user, the authentication inquiry unit 282 transmits an authentication inquiry based on the authentication information to the authentication server 190. When the authentication inquiry unit 282 determines, based on the authentication result received from the authentication server 190, that the authentication has succeeded and an appropriate use authority is granted, the authentication inquiry unit 282 makes the user-specific secret key in the authentication device available. The authentication inquiry unit 282 constitutes authentication means of the information device in the present embodiment.

The print data receiver 272 receives encrypted print data from the print server 140. The print data decryption unit 274 determines which encryption processing is performed on each of the print-setting information part and the drawing data part based on the encryption data, and decrypts each part of the received print data. The print data integration unit 276 integrates the decrypted print-setting information part and the decrypted drawing data part. The print processing executor 278 controls the plotter 66 illustrated in FIG. 3 based on the integrated print data to execute print processing. It should be noted that the print data receiver 272 constitutes receiving means of the information device in the present embodiment. The print data decryption unit 274 constitutes decrypting means of the information device in the present embodiment. Further, the print data integration unit 276 constitutes integrating means of the information device in the present embodiment.

Referring again to FIG. 6, in the described example, the print data decryption unit 274 decrypts the print-setting information part 342 and the drawing data part 314 using the user-specific secret key that is made available after the authentication. More specifically, the print data decryption unit 274 decrypts the encrypted print-setting information part 342 and the encrypted job-specific common key 316 using the user-specific secret key. Further, the print data decryption unit 274 decrypts, using the decrypted job-specific common key, the drawing data part 314 that has been encrypted at the terminal 110 using the job-specific common key.

Hereinafter, a description is given of a functional configuration of the authentication server 190 with reference to FIG. 4D. As illustrated in FIG. 4D, the module configuration 290 of the authentication server 190 includes an authentication inquiry receiver 292, an authentication management unit 294, and an authentication result transmitter 296.

For user authentication, the image forming apparatus 170 transmits the authentication information that is read out by the authentication information reader 280 to the authentication server 190. The authentication inquiry receiver 292 receives an authentication inquiry having the authentication information attached thereto. The authentication inquiry receiver 292 transfers the authentication information to the authentication management unit 294 to request authentication processing. In response to the authentication inquiry, the authentication management unit 294 checks the authentication information against user information to perform authentication processing. When the authentication succeeds, the authentication management unit 294 grants a use authority. When the authentication fails, the authentication management unit does not grant a user authority. The authentication result transmitter 296 sends back a response indicating the authentication result by the authentication management unit 294 to the image forming apparatus 170 from which the inquiry is transmitted.

In the described embodiment, a description is given of an example in which the image forming system 100 includes the authentication server 190 that performs authentication processing. However, as described above, in other embodiments, the image forming system 100 may not include the authentication server 190. In an embodiment in which the image forming system 100 does not include the authentication server 190, the image forming apparatus 170 includes an authentication management unit corresponding to the authentication management unit 294. This authentication management unit of the image forming apparatus 170 performs authentication processing in response to receiving the authentication inquiry and grants a use authority when the authentication succeeds.

Hereinafter, a description is given of changing a print setting on the print server 140 according to the present embodiment with reference to FIGs. 4A to 4D. In a specific embodiment, the print setting changer 250 of the print server 140 receives change information from an external apparatus such as the terminal 110 and the image forming apparatus 170. The change information indicates a change to the print-setting information part of the print data stored in the print data storage unit 246.

As illustrated in FIG. 4C, the module configuration 270 of the image forming apparatus 170 further includes an operation acceptance unit 284, a screen display unit 286, and a data communication unit 288.

The data communication unit 288 communicates with the print setting changer 250 of the print server 140 to transmit a request for acquiring a job list, a request for acquiring print-setting information of specific print data, and a request for changing the print-setting information of print data. Further, the data communication unit 288 acquires a job list information, the print-setting information of the print data, and a result of changing the print setting from the print server 140. Further, the data communication unit 288 acquires, together with the job list information for example, print-setting changeability information indicating whether the print-setting information part of the specific print data can be changed using the print server's secret key. The data communication unit 288 constitutes acquiring means and transmitting means of the information device in the present embodiment.

The screen display unit 286 displays various screens such as a job list screen on a display of the control panel 62 based on the acquired job list information and the print-setting information of print data. When the print-setting changeability information of the specific print data indicates that the print setting can be changed, the screen display unit 286 displays information of the print-setting information part and a print-setting change screen to accept an instruction for a change to the print-setting information part. The operation acceptance unit 284 accepts a user instruction via various screens. The operation acceptance unit 284 is implemented by, for example, an input device of the control panel 62. The operation acceptance unit 284 accepts an instruction for specifying a change to the setting information part, when the print-setting changeability information indicates that the print setting can be changed. The operation acceptance unit 284 and the screen display unit 286 constitute, respectively, operation means and display means of the information device in the present embodiment.

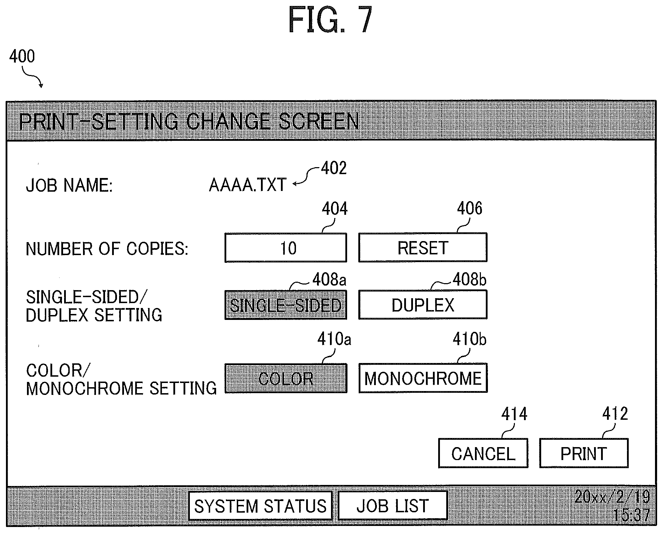

FIG. 7 is an example of a print-setting change screen 400 displayed on a display of the control panel 62 of the image forming apparatus 170 in the image forming system 100 according to the present embodiment. It should be noted that the print-setting change screen 400 of FIG. 7 is displayed before an actual print processing is performed in the image forming apparatus 170.

As illustrated in FIG. 7, the print-setting change screen 400 includes a job name display 402, a number-of-copies key 404, a reset key 406, radio buttons 408a and 408b, radio buttons 410a and 410b, a print key 412, and a cancel key 414. The job name display 402 indicates a job name. The number-of-copies key 404 accepts an instruction for changing a number of copies. The radio buttons 408a and 408b accept selection of single-sided printing or duplex printing. The radio buttons 410a and 410b accept selection of color printing or monochrome printing. The print key 412 accepts an instruction for execution of printing. The cancel key 414 accepts instruction for cancel of printing. The print-setting change screen 400 includes these setting change items to be selected or specified by a user to implement a change to the stored print settings.

The operation acceptance unit 284 accepts an instruction for changing the setting information part via the print-setting change screen 400. In response to an input of the change information via the print-setting change screen 400, the data communication unit 288 transmits, to the print server 140, the change information based on the instruction for changing the print-setting information part. Thus, the print setting changer 250 of the print server 140 receives the change information indicating a change to the print-setting information part input via the print-setting change screen 400.

The print setting changer 250 can further provide an external apparatus such as the terminal 110 that includes a general-purpose browser with a screen that enables a user to input change information indicating a change to the print-setting information part of the print data stored in the print data storage unit 246. In this case, the print setting changer 250 has a web server function to provide the print-setting change screen as a web user interface (Web UI).

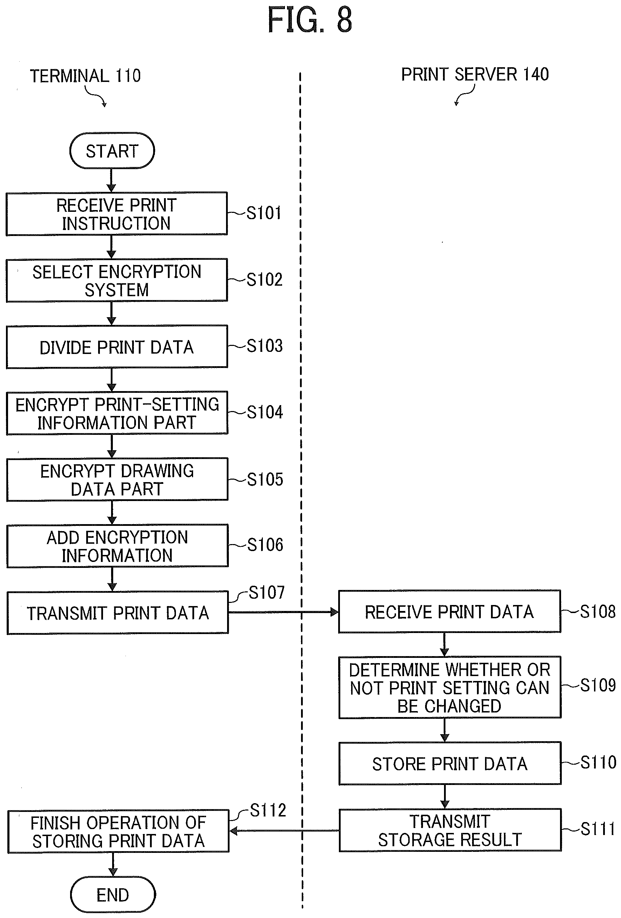

Hereinafter, a description is given of steps and a flow of data in a secured print processing performed by each apparatus or device according to the present embodiment with reference to FIGs. 8 to 14.

FIG. 8 is a flowchart illustrating steps in an operation of storing print data from the terminal 110 to the print server 140 in the image forming system 100 according to the present embodiment. First, at S101, the terminal 110 receives a user instruction for printing and generates print data by a printer driver.

At S102, the terminal 110 refers to a setting to select an encryption system to be applied to each part of the print data. At S103, the terminal 110 separates the print data into the print-setting information part and the drawing data part.

At S104, the terminal 110 encrypts the print-setting information of the print data using the encryption system that is selected in advance. At S105, the terminal 110 encrypts the drawing data part of the print data using the encryption system that is selected in advance. At S106, the terminal 110 adds the encryption information to the encrypted print data. At S107, the terminal 110 transmits, to the print server 140, the encrypted print data to which the encryption data is added. With these processing steps, the print server 140 is notified of the encryption information indicating the encryption processing applied to the setting information part.

At S108, the print server 140 receives the print data from the terminal 110. At S109, the print server 140 determines whether the print setting can be changed based on the encryption information. Further, at S109, the print server 140 adds the print-setting changeability information to the print data. At S110, the print server 140 stores the print data received from the terminal 110. At Sill, the print server 140 transmits the storage result to the terminal 110. In response to receiving the storage result from the print server 140, the terminal 110 displays the storage result on a display, for example, to finish this operation of storing the print data at S112. Then, the operation ends.

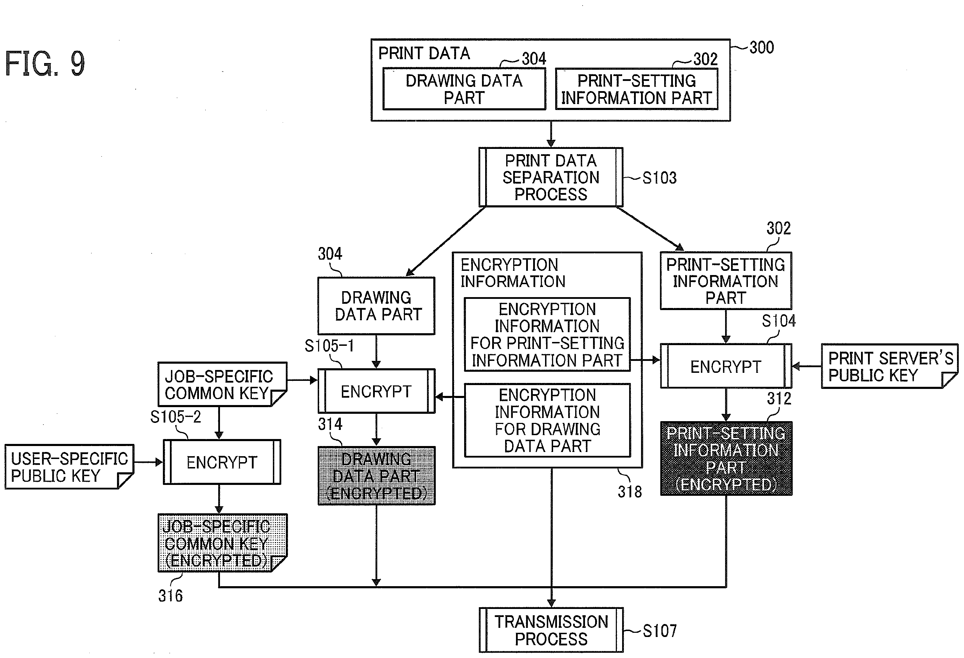

FIG. 9 is an example illustration for describing a flow of data in an operation of separating and encrypting the print data performed by the terminal 110 according to the present embodiment. As illustrated in FIG. 9, the print data 300 received from the printer driver is separated into the print-setting information part 302 and the drawing data part 304 by the print data separation processing (S103).

The print-setting information part 302 is encrypted based on the encryption system setting by the encryption processing (S104) using the print server's public key. The drawing data part 304 is encrypted based on the encryption system setting by the encryption processing (S105-1) using the job-specific common key. The job-specific common key is further encrypted by the encryption processing (S105-2) using the user-specific public key. The encrypted print-setting information part 312, drawing data part 314, and job-specific common key 316 is transmitted to the print server 140 together with the encryption information generated based on the setting of encryption system.

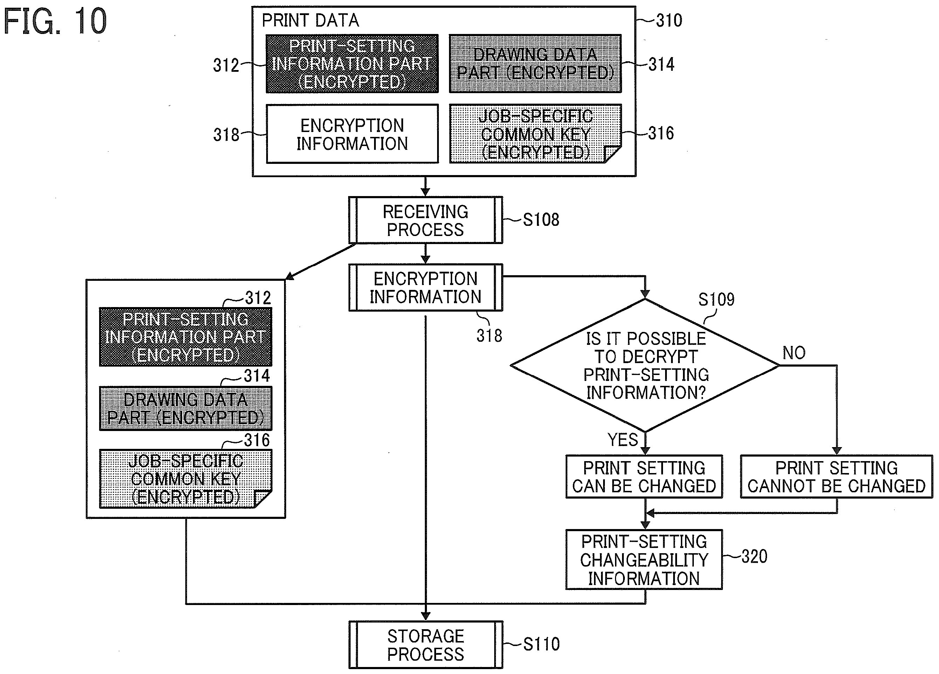

FIG. 10 is an example illustration for describing a flow of data in an operation of storing the print data performed by the print server 140 according to the present embodiment. The print server 140 receives the encrypted print data 310 at the data reception processing (S108). The print server 140 extracts the encryption information 318 from the print data 310, and determines, based on a type of the key used for the encryption, whether or not the print server 140 is able to decrypt the encrypted print-setting information part 312 at the determination processing (S109).

When a public key encryption system is applied to the encryption of the print-setting information part 302 using the print server's public key and therefore the encrypted print-setting information part 312 can be decrypted by the print server 140, the print-setting changeability information 320 is set indicating that the print-setting can be changed. By contrast, when the print server 140 determines that it cannot decrypt the encrypted print-setting information part 312, the print-setting changeability information 320 is set indicating that the print setting cannot be changed. The print-setting changeability information 320 is stored in the print server 140 at the storage processing (S110) together with the encrypted print-setting information part 312, the encrypted drawing data part 314, and the encrypted job-specific common key 316 included in the print data 310.

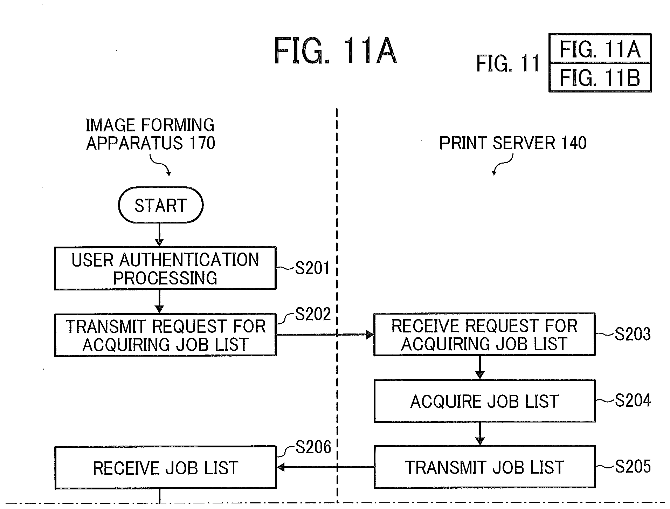

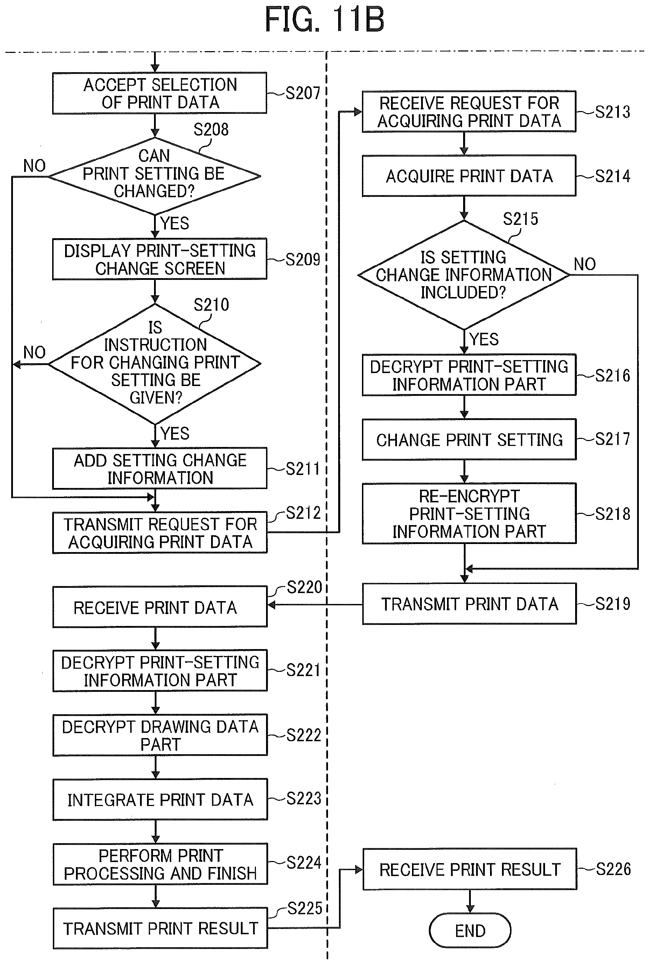

FIGs. 11A and 11B are a flowchart illustrating steps in an operation of acquiring the print data from the print server 140 to the image forming apparatus 170 to perform printing processing in the image forming system 100 according to the present embodiment. First, at S201, the image forming apparatus 170 performs user authentication processing. A detailed description is given later of the user authentication processing.

At S202, based on the authentication result, the image forming apparatus 170 transmits a request for acquiring a job list of the authorized user. At S203, the print server 140 receives the request for acquiring a job list from the image forming apparatus 170. At S204, the print server 140 acquires the job list of the user from the print data storage unit 246. At S205, the print server 140 transmits the job list to the image forming apparatus 170. For example, the print server 140 transmits, to the image forming apparatus 170, the print-setting changeability information of each piece of print data together with the job list.

In response to receiving the job list (S206), the screen display unit 286 of the image forming apparatus 170 displays a job list screen on a display. At S207, the operation acceptance unit 284 accepts a user selection of print data via the job list screen on the display. At S208, the image forming apparatus 170 reads out the print-setting changeability information of the selected print data and determines whether the print setting can be changed. When the image forming apparatus 170 determines that the print setting can be changed (S208: YES), the operation proceeds to S209. At S209, the image forming apparatus 170 displays the print-setting change screen as illustrated in FIG. 7.

At S210, the image forming apparatus 170 determines whether the user gives an instruction for changing the print setting via the print-setting change screen. When the image forming apparatus 170 determines that the instruction for changing the print setting is given (S210: YES), the operation proceeds to S209. At S211, the image forming apparatus 170 ads setting change information that is input via the print-setting change screen to a request for acquiring print data. This request for acquiring print data may be referred to as a "print-data acquisition request" hereinafter. At S212, the image forming apparatus 170 transmits, to the print server 140, the print-data acquisition request to which the setting change information is added. By contrast, when the image forming apparatus 170 determines that the print setting cannot be changed (S208: NO), or when the image forming apparatus 170 determines that the instruction for changing the print setting is not given (S210: NO), the operation proceeds to S212.

At S213, the print server 140 receives the print-data acquisition request from the image forming apparatus 170. At S214, the print server 140 acquires print data corresponding to the request from the print data storage unit 246. At S215, the print server 140 determines whether the print-data acquisition request includes the setting change information. When the print server 140 determines that the print-data acquisition request includes the setting change information (S215: YES), the operation proceeds to S216. It should be noted that the fact that the setting change information is included in the print-data acquisition request means that the user has given an instruction for changing the print setting as well as that the print setting of the print data can be changed.

At S216, the print server 140 decrypts the print-setting information part in the print data. At S217, the print server 140 updates the print setting based on the setting change information. At S218, the print server 140 re-encrypts the print-setting information part. By contrast, when the print server 140 determines that the print-data acquisition request does not include change information (S215: NO), the operation proceeds to S219. At S219, the print server 140 transmits the print data to the image forming apparatus 170.

At S220, the image forming apparatus 170 receives the print data from the print server 140. At S221, the image forming apparatus 170 decrypts the print-setting information part. At S222, the image forming apparatus 170 decrypts the drawing data part. Further, at S223, the image forming apparatus 170 integrates the decrypted print-setting information part and the decrypted drawing data part. At S224, the image forming apparatus 170 performs print processing based on the integrated print data and finishes the print processing. At S225, the image forming apparatus 170 transmits the print result to the print server 140. In response to receiving the print result (S226), the print server 140 records the completion of a print job or deletes the print data of the completed print job as needed. Then, the operation ends.

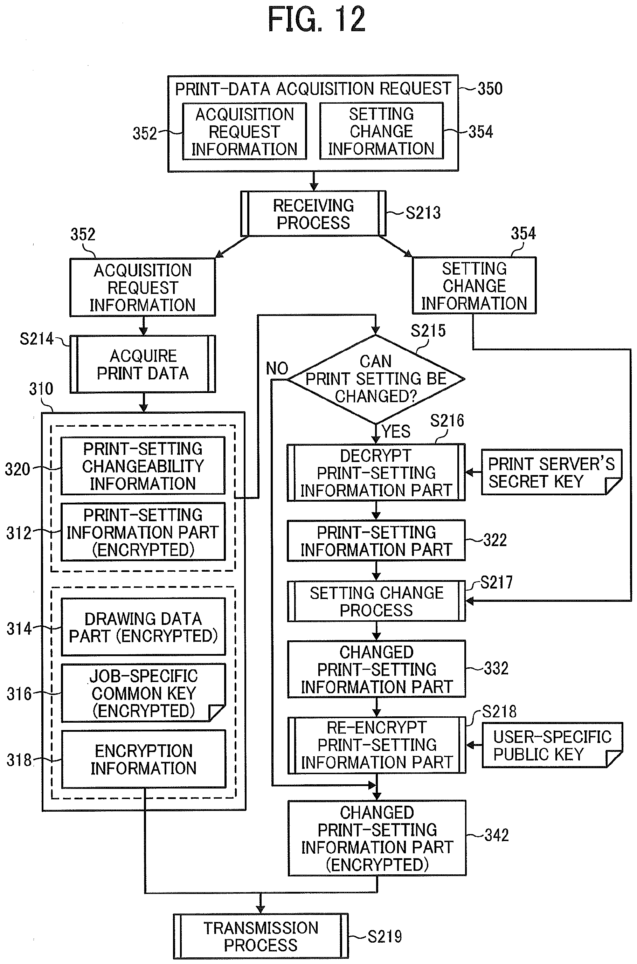

FIG. 12 is an example illustration for describing a flow of data in an operation of transmitting print data in response to a request for acquiring print data performed by the print server 140 according to the present embodiment. It should be noted that the data flow illustrated in FIG. 12 corresponds to a case in which the print-data acquisition request including the setting change information is transmitted from the image forming apparatus 170.

The print server 140 receives a print-data acquisition request 350 at the reception processing (S213). The print server 140 acquires the print data 310 from the print data storage unit 246 based on acquisition request information 352 included in the print-data acquisition request 350 at the data acquisition processing (S214). When the print server 140 determines that the print setting can be changed at the determination processing (S215), the print-setting information part 312 is decrypted at the decryption processing (S216) using the print server's secret key. Thus, the decrypted print-setting information part 322 is obtained. It should be noted the determination processing (S215) may be performed based on the print-setting changeability information 320 included in the print data 310. Alternatively, the determination processing (S215) may be performed based on whether or not the print-data acquisition request 350 includes setting change information 354.

The decrypted print-setting information part 322 is updated based on the setting change information 354 included in the print-data acquisition request 350 at the setting change processing (S217). The updated print-setting information part 332 is re-encrypted by the encryption processing (S218) using the user-specific public key. At the transmission processing (S219), the re-encrypted updated print-setting information part 342 is transmitted to the image forming apparatus 170 together with the encryption information 318, the encrypted job-specific common key 316, and the encrypted drawing data part 314.

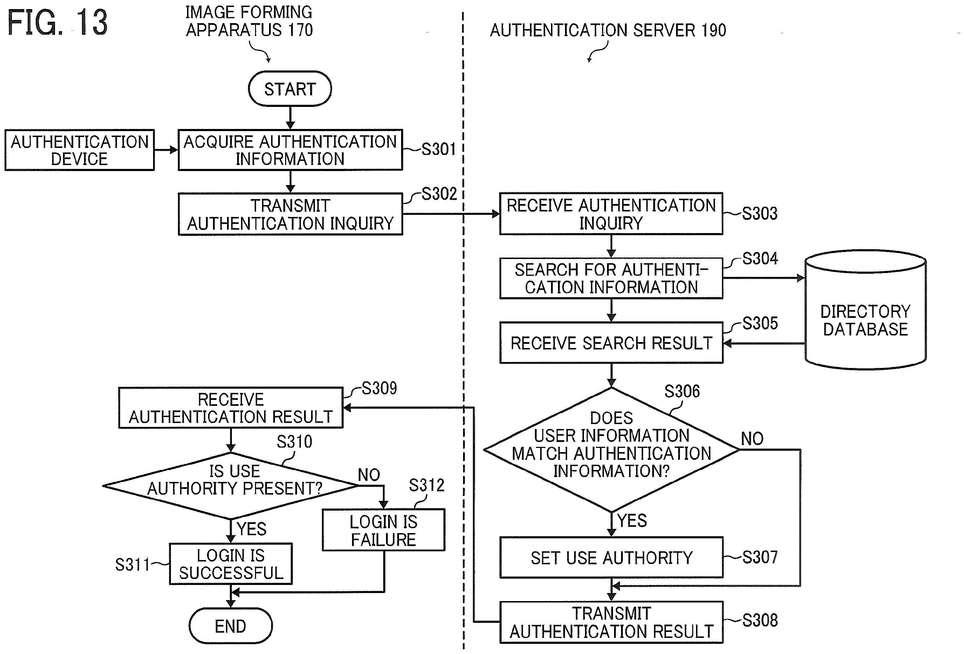

FIG. 13 is a flowchart illustrating steps in authentication processing performed by the image forming apparatus 170 and the authentication server 190 in cooperation with each other in the image forming system 100 according to the present embodiment. First, at S301, the authentication information reader 280 of the image forming apparatus 170 acquires authentication information from the authentication device. At S302, the image forming apparatus 170 transmits an authentication inquiry together with the acquired authentication information to the authentication server 190.

At S303, the authentication server 190 receives the authentication inquiry from the image forming apparatus 170. At S304, the authentication server 190 searches a directory database for the authentication information. At S305, the authentication server 190 acquires the search result. At S306, the authentication server 190 determines whether the user information matches the authentication information based on the search result. When the authentication server 190 determines that the authentication information transmitted together with the authentication inquiry is present in the directory database and the user information matches the authentication information (S306: YES), the operation proceeds to S307. At S307, the authentication server 190 sets a use authority for using applications, etc., to the user. At S308, the authentication server 190 transmits the authentication result to the image forming apparatus 170.

At S309, the image forming apparatus 170 receives the authentication result from the authentication server 190. At S310, the image forming apparatus 170 determines whether the use authority is present. When the image forming apparatus 170 determines that the use authority is present (S310: YES), at S311, the image forming apparatus 170 enables the user to log in the image forming apparatus 170 to allow the user to use applications or functions that are set by the use authority. Then, the operation ends. With this processing, the user-specific secret key in the authentication device is made available. By contrast, when the image forming apparatus 170 determines that the use authority is not preset (S310: NO), the operation proceeds to S312. At S312, the image forming apparatus 170 denies the login by the user. Then, the operation ends. In this case, a notification indicating a login failure is displayed on a display of the control panel 62 of the image forming apparatus 170, and the user is not allowed to use the applications or functions.

A description is given, with reference to FIG. 13, of a case in which the authentication server 190 is used in the authentication processing. Alternatively, in a case in which the authentication server 190 is not used, the authentication information acquired from the authentication device at S301 is transmitted to the authentication management unit of the image forming apparatus 170. This authentication management unit of the image forming apparatus 170 searches for the corresponding authentication information. When the authentication information is present, a use authority for using applications is set to the user in the image forming apparatus 170. With this processing, the user-specific secret key is also made available. When the authentication information is not present, a notification indicating a login failure is displayed on a display of the control panel 62 of the image forming apparatus 170.

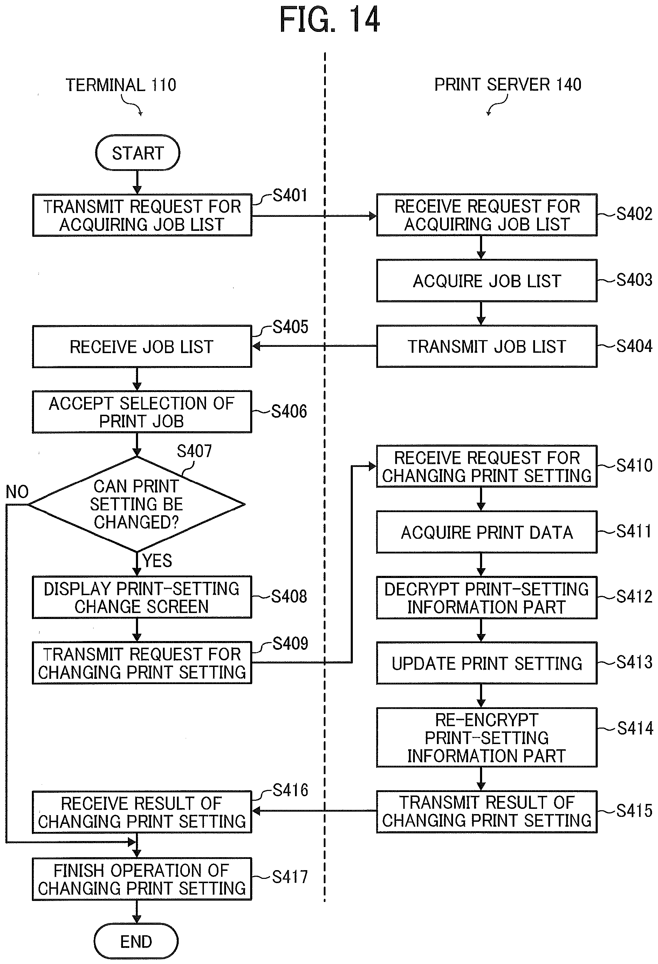

In an operation illustrated in the flowchart of FIGs. 11A and 11B, the change of the print setting is performed when the image forming apparatus 170 acquires print data from the print server 140. Hereinafter, a description is given of steps in an operation of changing the print stetting of print data stored in the print server 140 from the terminal 110, with reference to FIG. 14. First, at S401, the terminal 110 transmits, to the print server 140, a request for acquiring a job list of the user using a browser. At S402, the print server 140 receives the request for acquiring a job list from the terminal 110. At S403, the print server 140 acquires the job list of the user. At S404, the print server 140 transmits screen data containing the job list to the terminal 110.

In response to receiving the screen data containing the job list from the print server 140 (S405), the terminal 110 displays a job list screen on the browser. At S406, the terminal 110 accepts a user selection of a print job via the input device. At S407, the terminal 110 reads out, from the job list information, the print-setting changeability information of the selected print job to determine whether the print setting can be changed. When the terminal 110 determines that the print setting can be changed (S407: YES), the operation proceeds to S408. At S408, terminal 110 transmits a request for the print-setting change screen to the print server 140, receives the print-setting change screen from the print server 140, and displays the print-setting change screen on the browser. The print-setting change screen enables the user to input the setting change information. At S409, the terminal 110 transmits a request for changing the print setting to the print server 140. The request for changing the print setting includes the setting change information added thereto.

At S410, the print server 140 receives the request for changing the print setting from the terminal 110. At S411, the print server 140 acquires the print data corresponding to the request for change. At S412, the print server 140 decrypts the print-setting information part of the print data. At S413, the print server 140 updates the print-setting information part to reflect the setting change information. At S414, the print server 140 re-encrypts the print-setting information part and stores the re-encrypted part. At S415, the print server 140 transmits the result of changing the print setting to terminal 110. At S416, the terminal 110 receives the result of changing the print setting from the print server 140. At S417, the terminal 110 displays the change result on a browser to finish the operation of changing the print setting. Then, the operation ends. When the terminal 110 determines that the print setting cannot be changed (S407: NO), the operation directly proceeds to S417.

As described heretofore, according to the above-described embodiment, an information processing system, a job processing method, a data storage apparatus, and an information device are provided, in which a substantive data part of job data is kept confidential on a communication path and at the data storage apparatus, while a setting information part of the job data can be changed at the data storage apparatus.

The job data, which has been encrypted, is transferred via the communication path. At the data storage apparatus, the substantive data part, which may contain confidential information, has been encrypted. By contrast, when the setting information part can be decrypted at the data storage apparatus, the setting information part is decrypted to accept the change of setting.

The functional blocks as described above are implemented by a computer-executable program written by programming languages such as an assembler language, C, and object-oriented programming languages such as C++, C#, and Java (registered trademark). The program may be distributed via a telecommunication line as being stored in a computer-readable storage medium such as a ROM, an electrically erasable and programmable read only memory (EEPROM), an electrically programmable read only memory (EPROM), a flash memory, a flexible disk, a compact disc read only memory (CD-ROM), a compact disc rewritable (CD-RW), a digital versatile disk (DVD)-ROM, a DVD-RAM, a DVD-RW, a Blu-ray disc, a secure digital (SD) card, and a magneto-optical disc (MO).

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of the appended claims.

The present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

1. An information processing system (100) comprising a terminal apparatus (110), a data storage apparatus (140), and an information device (170), wherein
the terminal apparatus (110) includes:
selecting means (214) for selecting different encryption processings to be respectively performed on a setting information part of job data and a substantive data part of the job data; and
notifying means (218, 220) for notifying information indicating the encryption processing performed on the setting information part of the job data,
the data storage apparatus (140) includes:
storage means (246) for storing the job data received from the terminal apparatus (110); and
determining means (244) for determining, based on the notified information indicating the encryption processing, whether or not a setting indicated by the setting information part of the received job data can be changed by the data storage apparatus (140), and
the information device (170) includes:
receiving means (272) for receiving the job data from the data storage apparatus (140);
decrypting means (274) for decrypting the received job data; and
integrating means (276) for integrating the setting information part and the substantive data part of the received job data; **characterized in that**
the determining means (244) determines whether the setting indicated by the setting information part of the received job data can be changed based on first key information stored in the data storage apparatus (140),
in the encryption processing performed on the substantive data part of the job data, the substantive data part is encrypted such that the encrypted substantive part is later decrypted based on second key information that is specific to a user,
the data storage apparatus (140) further comprises:
accepting means (250) for accepting change information to be applied to the setting information part;
decrypting means (248) for decrypting the setting information part in response to a determination by the determination means (244) that the setting indicated by the setting information part can be changed;
changing means (250) for updating the decrypted setting information part to incorporate the change information based on the accepted change information; and
encrypting means (252) for re-encrypting the setting information part that has been updated to incorporate the change information such that the re-encrypted setting information part is later decrypted based on the second key information, and
the decrypting means (274) of the information device (170) decrypts each of the setting information part and the substantive data part of the received job data based on the second key information.

2. The information processing system (100) of claim 1, wherein the information device (170) further comprises:
display means (286) for displaying information indicated by the setting information part of the job data stored in the data storage apparatus (140);
operation means (284) for accepting an instruction for changing the setting information part; and
transmitting means (288) for transmitting, to the data storage apparatus (140), the change information based on the instruction for changing the setting information part.

3. The information processing system (100) of claim 1 or 2, wherein
the data storage apparatus (140) further comprises screen providing means (250) for providing a screen that accepts an input of the change information to be applied to the setting information part of the job data stored in the storage means (246), and
the accepting means (250) accepts the change information input via the screen.

4. The information processing system (100) of any one of claims 1 to 3, wherein
the first key information is a first secret key that is specific to the data storage apparatus (140) and corresponds to a first public key used when encrypting the setting information part at the terminal apparatus (110),
the second key information is a second secret key that is specific to a user and corresponds to a second public key used when encrypting the substantive data part at the terminal apparatus (110), and
the encryption processings performed respectively on the setting information part and the substantive data part are independently selected from 1) an encryption of the setting information part or the substantive data part with a public-key encryption system and 2) a combination of an encryption of the setting information part or the substantive data part with a common key encryption system and a subsequent encryption of a common key with a public key encryption system.

5. The information processing system (100) of any one of claims 1 to 4, wherein the information device (170) further comprises reading means (280) for reading out the second key information stored in an authentication device that is communicable with the information device (170).

6. The information processing system (100) of any one of claims 1 to 5, wherein
the information device (170) further comprises authentication means (282) for accepting an authentication procedure from a user and making the second key information available when authentication is successful, and
the authentication means (282) performs authentication processing in response to accepting the authentication procedure, and grants a use authority when the authentication is successful.

7. The information processing system (100) of claim 6, further comprising an authentication server (190) that performs authentication processing in response to an inquiry for authentication from the information device (170), grants a use authority when the authentication processing is successful, and gives an authentication result back to the information device (170),
wherein the authentication means (282) makes the inquiry for authentication to the authentication server (190) to receive the authentication result.

8. A job processing method performed by an information processing system (100) comprising a terminal apparatus (110), a data storage apparatus (140), and an information device (170), the method comprising;
selecting (S101), at the terminal apparatus (110), different encryption processings to be respectively performed on a setting information part of job data and a substantive data part of the job data, the substantive data part is encrypted such that the encrypted substantive part is later decrypted based on second key information that is specific to a user;
notifying (S106, S107), from the terminal apparatus (110) to the data storage apparatus (140), the information indicating the encryption processing performed on the setting information part of the job data,
storing (S110), at the data storage apparatus (140), the job data received from the terminal apparatus;
determining (S109, S208), at the data storage apparatus (140), based on first key information stored in the data storage apparatus (140), whether or not a setting indicated by the setting information part of the received job data can be changed by the data storage apparatus;
accepting, by the data storage apparatus (140), change information to be applied to the setting information part;
decrypting (S216) , by the data storage apparatus (140), the setting information part in response to a determination that the setting indicated by the setting information part can be changed;
updating (S217), by the data storage apparatus (170), the decrypted setting information part to incorporate the change information based on the accepted change information;
re-encrypting (S218), by the data storage apparatus (170), the setting information part that has been updated to incorporate the change information such that the re-encrypted setting information part is later decrypted based on the second key information;
receiving (S220), at the information device (170), the job data from the data storage apparatus;
decrypting (S221, S222), at the information device (170), each of the setting information part and the substantive data part of the received job data based on the second key information; and
integrating (S223), at the information device (170), a setting information part and a substantive data part of the received job data.

9. A carrier means carrying computer readable code that, when executed by a computer, causes the computer to control an information processing system (100) to perform the method of claim 8.

## Patentansprüche

1. Ein Informationsverarbeitungssystem (100) enthaltend ein Endgerät (110), ein Datenspeichergerät (140) und ein Informationsgerät (170), wobei
das Endgerät (110) enthält:
Auswahlmittel (214) zum Auswählen verschiedener Verschlüsselungsverfahren, die entsprechend auszuführen sind auf einen Einstellungsinformationsteil von Jobdaten und einen Substanzdatenteil der Jobdaten; und
Meldemittel (218, 220) zum Melden von Informationen, die das Verschlüsselungsverfahren melden, das auf den Einstellungsinformationsteil der Jobdaten angewendet wurde,
das Datenspeichergerät (140) enthält:
Speichermittel (246) zum Speichern der von dem Endgerät (110) empfangenen Jobdaten; und
Ermittlungsmittel (244) zum Ermitteln, basierend auf der gemeldeten Information, die das Verschlüsselungsverfahren anzeigt, ob oder ob nicht eine Einstellung angegeben in dem Einstellungsinformationsteil der Jobdaten von dem Datenspeichergerät (140) geändert werden kann, und
das Informationsgerät enthält:
Empfangsmittel (272) zum Empfangen der Jobdaten von dem Datenspeichergerät (140);
Entschlüsselungsmittel (274) zum Entschlüsseln der empfangenen Jobdaten; und
Integrationsmittel (276) zum Zusammenführen des Einstellungsinformationsteils und des Substanzdatenteils der empfangenen Jobdaten; **dadurch gekennzeichnet, dass**
die Ermittlungsmittel (244) ermitteln, ob die in dem Einstellungsinformationsteil der Jobdaten angegebene Einstellung von dem Datenspeichergerät (140) geändert werden kann, basierend auf einer ersten Schlüsselinformation, die in dem Datenspeichergerät (140) gespeichert ist,
in dem Verschlüsselungsvorgang, der auf den Substanzdatenteil der Jobdaten angewendet wird, der Substanzdatenteil derart verschlüsselt wird, dass der verschlüsselte Substanzteil später basierend auf zweiten Schlüsselinformationen, die spezifisch für einen Benutzer sind, entschlüsselt wird,
das Datenspeichergerät (140) weiter aufweist:
Annahmemittel (250) zum Annehmen von Änderungsinformationen, die auf den Einstellungsinformationsteil anzuwenden sind;
Entschlüsselungsmittel (248) zum Entschlüsseln des Einstellungsinformationsteils als Antwort auf eine Ermittlung durch die Ermittlungsmittel (244), dass die von dem Einstellungsinformationsteil angegebene Einstellung geändert werden kann;
Änderungsmittel (250) zum Aktualisieren des entschlüsselten Einstellungsinformationsteils, um die Änderungsinformation basierend auf der angenommenen Änderungsinformation einzubinden; und
Verschlüsselungsmittel (252) zum Wiederverschlüsseln des Einstellungsinformationsteils, der aktualisiert wurde, um die Änderungsinformation einzubinden, sodass der wiederverschlüsselte Einstellungsinformationsteil später auf Basis der zweiten Schlüsselinformation entschlüsselt wird, und
die Entschlüsselungsmittel (274) des Informationsgeräts (170) jeden aus dem Einstellungsinformationsteil und dem Substanzdatenteil der empfangenen Jobdaten basierend auf der zweiten Schlüsselinformation entschlüsseln.

2. Das Informationsverarbeitungssystem (100) des Anspruchs 1, wobei das Informationsgerät (170) außerdem enthält:
Anzeigemittel (286) zum Anzeigen von Informationen, die angegeben werden von dem Einstellungsinformationsteil der in dem Datenspeichergerät (140) gespeicherten Jobdaten;
Betätigungsmittel (284) zum Annehmen einer Instruktion zum Ändern des Einstellungsinformationsteils; und
Übertragungsmittel (288) zum Übertragen, an das Datenspeichergerät (140), der Änderungsinformation basierend auf der Instruktion zum Ändern des Einstellungsinformationsteils.

3. Das Informationsverarbeitungssystem des Anspruchs 1 oder 2, wobei
das Datenspeichergerät (140) außerdem Bildschirmbereitstellungsmittel (250) zum Bereitstellen eines Bildschirms, der eine Eingabe der Änderungsinformation, die auf den Einstellungsinformationsteil der in dem Speichermittel (246) gespeicherten Jobdaten anzuwenden ist, annimmt, und
die Annahmemittel (250) die Änderungsinformation, die über den Bildschirm eingegeben wird, annimmt.

4. Das Informationsverarbeitungssystem (100) eines der Ansprüche 1 bis 3, wobei
die erste Schlüsselinformation ein erster geheimer Schlüssel ist, der spezifisch für das Datenspeichergerät (140) ist und zu einem ersten öffentlichen Schlüssel korrespondiert, der verwendet wird, wenn der Einstellungsinformationsteil in dem Endgerät (110) verschlüsselt wird,
die zweite Schlüsselinformation ein zweiter geheimer Schlüssel ist, der spezifisch für einen Benutzer ist und zu einem zweiten öffentlichen Schlüssel korrespondiert, der verwendet wird, wenn der Substanzdatenteil in dem Endgerät (110) verschlüsselt wird, und
die Verschlüsselungsvorgänge, die jeweils auf den Einstellungsinformationsteil und den Substanzdatenteil individuell ausgewählt werden aus 1) einer Verschlüsselung des Einstellungsinformationsteils oder des Substanzdatenteils mittels eines Public-Key-Verschlüsselungssystems und 2) einer Kombination aus der Verschlüsselung des Einstellungsinformationsteils oder des Substanzdatenteils mittels eines Common-Key-Verschlüsselungssystems und einer nachfolgenden Verschlüsselung eines öffentlichen Schlüssels mittels eines Public-Key-Verschlüsselungssystems.

5. Das Informationsverarbeitungssystem (100) eines der Ansprüche 1 bis 4, wobei das Informationsgerät (170) außerdem Lesemittel (280) aufweist zum Auslesen der zweiten Schlüsselinformation, die in einem Authentifizierungsgerät gespeichert ist, das mit dem Informationsgerät (170) kommunizieren kann.

6. Das Informationsverarbeitungssystem (100) eines der Ansprüche 1 bis 5, wobei
das Informationsgerät (170) außerdem Authentifizierungsmittel (282) aufweist zum Annehmen eines Authentifizierungsvorgangs von einem Benutzer und zum Verfügbarmachen der zweiten Schlüsselinformation, wenn die Authentifizierung erfolgreich war, und
das Authentifizierungsmittel (282) den Authentifizierungsvorgang durchführt als Antwort auf das Annehmen des Authentifizierungsvorgangs und eine Benutzungsberechtigung erteilt, wenn die Authentifizierung erfolgreich war.

7. Das Informationsverarbeitungssystem (100) des Anspruchs 6, außerdem aufweisend einen Authentifizierungsserver (190), der eine Authetifizierungsverarbeitung durchführt als Antwort auf eine Authentifizierungsanfrage von dem Informationsgerät (170), eine Benutzungsberechtigung erteilt, wenn der Authentifizierungsvorgang erfolgreich war, und ein Authentifizierugsergebnis an das Informationsgerät (170) zurückgibt,
wobei das Authentifizierungsmittel (282) die Authentifizierungsanfrage an den Authentifizierungsserver (190) stellt, um das Authentifizierungsergebnis zu empfangen.

8. Ein Jobverarbeitungsverfahren, durchgeführt von einem Informationsverarbeitungssystem (100) enthaltend ein Endgerät (110), ein Datenspeichergerät (140) und ein Informationsgerät (170), das Verfahren enthaltend;
das Auswählen (S101), in dem Endgerät (110), verschiedener Verschlüsselungsverfahren, die entsprechend auszuführen sind auf einen Einstellungsinformationsteil von Jobdaten und einen Substanzdatenteil der Jobdaten, wobei der Substanzdatenteil derart verschlüsselt wird, dass der verschlüsselte Substanzteil später basierend auf zweiten Schlüsselinformationen, die spezifisch für einen Benutzer sind, entschlüsselt wird;
das Melden (S106, S107), von dem Endgerät (100) an das Datenspeichergerät (140), von Informationen, die das Verschlüsselungsverfahren anzeigen, das auf den Einstellungsinformationsteil der Jobdaten angewendet wurde,
das Speichern (S110), in dem Datenspeichergerät (140), der von dem Endgerät empfangenen Jobdaten;
das Ermitteln (S109, S208), in dem Datenspeichergerät (140), basierend auf einer ersten Schlüsselinformation, die in dem Datenspeichergerät (140) gespeichert ist, ob oder ob nicht eine Einstellung angegeben in dem Einstellungsinformationsteil der empfangenen Jobdaten geändert werden kann;
das Annehmen, durch das Datenspeichergerät (140), von Änderungsinformationen, die auf den Einstellungsinformationsteil anzuwenden sind;
das Entschlüsseln (S216), durch das Datenspeichergerät (140), des Einstellungsinformationsteils als Antwort auf eine Ermittlung, dass die von dem Einstellungsinformationsteil angegebene Einstellung geändert werden kann;
das Aktualisieren (S217), durch das Datenspeichergerät (170), des entschlüsselten Einstellungsinformationsteils, um die Änderungsinformation basierend auf der angenommenen Änderungsinformation einzubinden;
das Wiederverschlüsseln (S218), durch das Datenspeichergerät (170), des Einstellungsinformationsteils, der aktualisiert wurde, um die Änderungsinformation einzubinden, sodass der wiederverschlüsselte Einstellungsinformationsteil später auf Basis der zweiten Schlüsselinformation entschlüsselt wird,
das Empfangen (S220), durch das Informationsgerät (170), der Jobdaten von dem Datenspeichergerät;
das Entschlüsseln (S221, S222), in dem Informationsgerät (170), von jedem aus dem Einstellungsinformationsteil und dem Substanzdatenteil der empfangenen Jobdaten basierend auf der zweiten Schlüsselinformation; und
das Zusammenführen (S223), in dem Informationsgerät (170), des Einstellungsinformationsteils und des Substanzdatenteils der empfangenen Jobdaten.

9. Ein Trägermittel, das computerlesbaren Code trägt, der, wenn er von einem Computer ausgeführt wird, den Computer dazu veranlasst, ein Informationsverarbeitungssystem (100) zu steuern, sodass es das Verfahren des Anspruchs 8 durchführt.

## Revendications

1. Système de traitement d'informations (100) comprenant un appareil de terminal (110), un appareil de stockage de données (140), et un dispositif d'informations (170), dans lequel
l'appareil de terminal (110) inclut :
des moyens de sélection (214) pour sélectionner différents traitements de chiffrement destinés à être respectivement effectués sur une partie d'informations de réglage de données de travail et une partie de données substantielle des données de travail ; et
des moyens de notification (218, 220) pour effectuer la notification d'informations indiquant le traitement de chiffrement effectué sur la partie d'informations de réglage des données de travail,
l'appareil de stockage de données (140) inclut :
des moyens de stockage (246) pour stocker les données de travail reçues à partir de l'appareil de terminal (110) ; et
des moyens de détermination (244) pour déterminer, sur la base des informations, dont la notification a été effectuée, indiquant le traitement de chiffrement, le fait qu'un réglage indiqué par la partie d'informations de réglage des données de travail reçues peut être changé ou non par l'appareil de stockage de données (140), et
le dispositif d'informations (170) inclut :
des moyens de réception (272) pour recevoir les données de travail à partir de l'appareil de stockage de données (140) ;
des moyens de déchiffrement (274) pour déchiffrer les données de travail reçues ; et
des moyens d'intégration (276) pour intégrer la partie d'informations de réglage et la partie de données substantielle des données de travail reçues ; **caractérisé en ce que**
les moyens de détermination (244) déterminent le fait que le réglage indiqué par la partie d'informations de réglage des données de travail reçues peut être changé ou non, sur la base de premières informations de clef stockées dans l'appareil de stockage de données (140),
dans le traitement de chiffrement effectué sur la partie de données substantielle des données de travail, la partie de données substantielle est chiffrée de telle sorte que la partie substantielle chiffrée soit ultérieurement déchiffrée sur la base de secondes informations de clef qui sont spécifiques à un utilisateur,
l'appareil de stockage de données (140) comprend en outre :
des moyens d'acceptation (250) pour accepter des informations de changement destinées à être appliquées sur la partie d'informations de réglage ;
des moyens de déchiffrement (248) pour déchiffrer la partie d'informations de réglage en réponse à une détermination, par les moyens de détermination (244), que le réglage indiqué par la partie d'informations de réglage peut être changé ;
des moyens de changement (250) pour mettre à jour la partie d'informations de réglage déchiffrée pour incorporer les informations de changement sur la base des informations de changement acceptées ; et
des moyens de chiffrement (252) pour rechiffrer la partie d'informations de réglage qui a été mise à jour pour incorporer les informations de changement de telle sorte que la partie d'informations de réglage rechiffrée soit ultérieurement déchiffrée sur la base des secondes informations de clef, et
les moyens de déchiffrement (274) du dispositif d'informations (170) déchiffrent chacune de la partie d'informations de réglage et de la partie de données substantielle des données de travail reçues sur la base des secondes informations de clef.

2. Système de traitement d'informations (100) selon la revendication 1, dans lequel le dispositif d'informations (170) comprend en outre :
des moyens d'affichage (286) pour afficher des informations indiquées par la partie d'informations de réglage des données de travail stockées dans l'appareil de stockage de données(140) ;
des moyens d'opération (284) pour accepter une instruction pour changer la partie d'informations de réglage ; et
des moyens de transmission (288) pour transmettre, à l'appareil de stockage de données (140), les informations de changement sur la base de l'instruction pour changer la partie d'informations de réglage.

3. Système de traitement d'informations (100) selon la revendication 1 ou 2, dans lequel
l'appareil de stockage de données (140) comprend en outre des moyens de fourniture d'écran (250) pour fournir un écran qui accepte une entrée des informations de changement destinées à être appliquées sur la partie d'informations de réglage des données de travail stockées dans les moyens de stockage (246), et
les moyens d'acceptation (250) acceptent les informations de changement entrées par l'intermédiaire de l'écran.

4. Système de traitement d'informations (100) selon l'une quelconque des revendications 1 à 3, dans lequel
les premières informations de clef sont une première clef secrète qui est spécifique à l'appareil de stockage de données (140) et correspond à une première clef publique utilisée lors du chiffrement de la partie d'informations de réglage at l'appareil de terminal (110),
les secondes informations de clef sont une seconde clef secrète qui est spécifique à un utilisateur et correspond à une seconde clef publique utilisée lors du chiffrement de la partie de données substantielle at l'appareil de terminal (110), et
les traitements de chiffrement effectués respectivement sur la partie d'informations de réglage et la partie de données substantielle sont indépendamment sélectionnés parmi 1) un chiffrement de la partie d'informations de réglage ou de la partie de données substantielle avec un système de chiffrement à clef publique et 2) une association d'un chiffrement de la partie d'informations de réglage ou de la partie de données substantielle avec un système de chiffrement à clef commune et d'un chiffrement subséquent d'une clef commune avec un système de chiffrement à clef publique.

5. Système de traitement d'informations (100) selon l'une quelconque des revendications 1 à 4, dans lequel le dispositif d'informations (170) comprend en outre des moyens de lecture (280) pour lire les secondes informations de clef stockées dans un dispositif d'authentification qui peut communiquer avec le dispositif d'informations (170).

6. Système de traitement d'informations (100) selon l'une quelconque des revendications 1 à 5, dans lequel
le dispositif d'informations (170) comprend en outre des moyens d'authentification (282) pour accepter une procédure d'authentification provenant d'un utilisateur et rendre les secondes informations de clef disponibles lorsque l'authentification est réussie, et
les moyens d'authentification (282) effectuent un traitement d'authentification en réponse à l'acceptation de la procédure d'authentification, et accordent une autorité d'utilisation lorsque l'authentification est réussie.

7. Système de traitement d'informations (100) selon la revendication 6, comprenant en outre un serveur d'authentification (190) qui effectue le traitement d'authentification en réponse à une interrogation, en ce qui concerne une authentification, en provenance du dispositif d'informations (170), accorde une autorité d'utilisation lorsque le traitement d'authentification est réussi, et redonne un résultat d'authentification au dispositif d'informations (170),
dans lequel les moyens d'authentification (282) réalisent l'interrogation, en ce qui concerne l'authentification, auprès du serveur d'authentification (190) pour recevoir le résultat d'authentification.

8. Procédé de traitement de travail effectué par un système de traitement d'informations (100) comprenant un appareil de terminal (110), un appareil de stockage de données (140), et un dispositif d'informations (170), le procédé comprenant ;
la sélection (S101), à l'appareil de terminal (110), de différents traitements de chiffrement destinés à être respectivement effectués sur une partie d'informations de réglage de données de travail et une partie de données substantielle des données de travail, la partie de données substantielle est chiffrée de telle sorte que la partie substantielle chiffrée soit ultérieurement déchiffrée sur la base de secondes informations de clef qui sont spécifiques à un utilisateur ;
la notification (S106, S107), depuis l'appareil de terminal (110), à l'appareil de stockage de données (140), des informations indiquant le traitement de chiffrement effectué sur la partie d'informations de réglage des données de travail,
le stockage (S110), à l'appareil de stockage de données (140), des données de travail reçues à partir de l'appareil de terminal ;
la détermination (S109, S208), à l'appareil de stockage de données (140), sur la base de premières informations de clef stockées dans l'appareil de stockage de données (140), du fait qu'un réglage indiqué par la partie d'informations de réglage des données de travail reçues peut être changé ou non par l'appareil de stockage de données ;
l'acceptation, par l'appareil de stockage de données (140), d'informations de changement destinées à être appliquées sur la partie d'informations de réglage ;
le déchiffrement (S216), par l'appareil de stockage de données (140), de la partie d'informations de réglage en réponse à une détermination que le réglage indiqué par la partie d'informations de réglage peut être changé ;
la mise à jour (S217), par l'appareil de stockage de données (170), de la partie d'informations de réglage déchiffrée pour incorporer les informations de changement sur la base des informations de changement acceptées ;
le rechiffrement (S218), par l'appareil de stockage de données (170), de la partie d'informations de réglage qui a été mise à jour pour incorporer les informations de changement de telle sorte que la partie d'informations de réglage rechiffrée soit ultérieurement déchiffrée sur la base des secondes informations de clef ;
la réception (S220), au dispositif d'informations (170), des données de travail, à partir de l'appareil de stockage de données ;
le déchiffrement (S221, S222), au dispositif d'informations (170), de chacune de la partie d'informations de réglage et de la partie de données substantielle des données de travail reçues sur la base des secondes informations de clef ; et
l'intégration (S223), au dispositif d'informations (170), d'une partie d'informations de réglage et d'une partie de données substantielle des données de travail reçues.

9. Moyens porteurs portant un code lisible par ordinateur qui, lorsqu'il est exécuté par un ordinateur, fait en sorte que l'ordinateur commande un système de traitement d'informations (100) pour effectuer le procédé selon la revendication 8.
